# EUROPEAN PATENT SPECIFICATION

(11) **EP 2 105 353 B1**
(45) Date of publication and mention of the grant of the patent: **08.10.2014**
(21) Application number: 08425196.6
(22) Date of filing: 26.03.2008
(51) Int. Cl.: B60R 7/06

(54) **Glove compartment for a motor vehicle**
Handschuhfach für ein Motorfahrzeug
Boîte à gants pour véhicule à moteur

(43) Date of publication of application: 30.09.2009
(73) Proprietor: Fiat Group Automobiles S.p.A., 10135 Torino (TO) (IT)
(72) Inventor: Toppani, Nicolas c/o Fiat Group Automobiles S.p.A., 10135 Torino (IT); Falagario, Angela c/o Fiat Group Automobiles S.p.A., 10135 Torino (IT)
(74) Representative: Di Sciuva, Michele

(56) References cited:
- WO-A-2007/036339
- DE-A1- 3 510 405
- DE-A1-102005 012 305
- FR-A- 2 764 255
- FR-A- 2 872 751

## Description

The present invention relates to a glove compartment for a motor vehicle.

Glove compartments are known that are integrated into the dashboard of a motor vehicle, essentially comprising a body defining a storage space for various objects and a door hinged to the body.

In more detail, the door is rotatable about an axis arranged essentially horizontally in use between a first position in which it engages an opening of access to the space and a second raised position in which it is at some distance from the opening so as to allow access to said space.

The need has been felt in the sector to increase the volume of the storage space and to ensure good accessibility to said storage space ensuring, at the same time, good stability of the door in the second position and a pleasant aesthetic appearance of said door.

FR2764255 discloses a glove compartment comprising a housing and a cover, which is pivotable about an axis and has a front wall and lateral walls. The lateral walls of the cover are slidably coupled to the walls of the housing to allow a translation of the cover in a direction perpendicular_to its front wall and to obtain an increased useable storage volume. A return spring acts on the cover to close the opening of the housing.

The purpose of the present invention is to provide a glove compartment for a motor vehicle which meets the needs specified above in a simple and cost-effective manner.

This purpose is achieved by the present invention, as it relates to a glove compartment for a motor vehicle, as defined in claim 1.

For a better understanding of the present invention, a preferred embodiment is described below, purely by way of a non-limiting example and with reference to the attached drawings, in which:
- Figure 1 is a perspective view from the front of a glove compartment produced according to the dictates of the present invention;

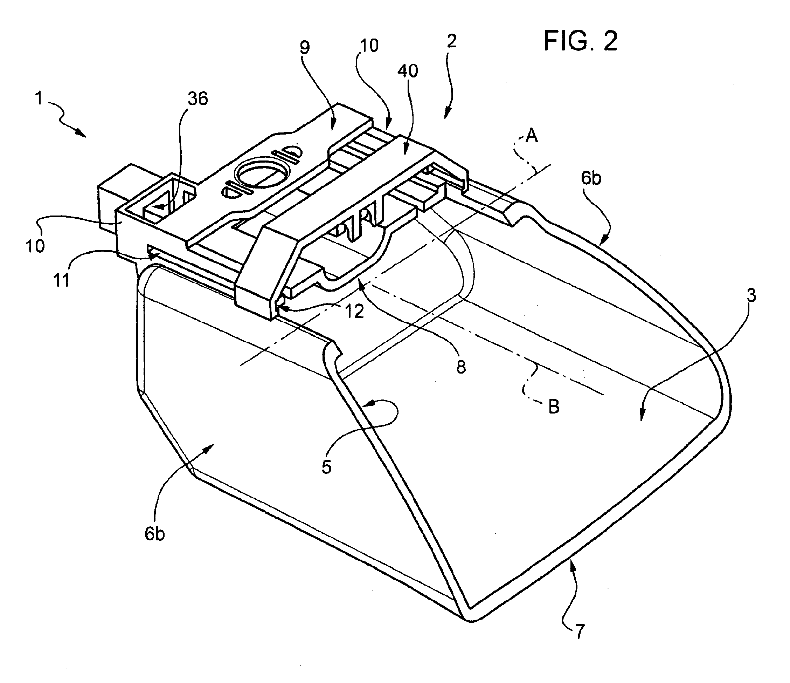

- Figure 2 illustrates the compartment of Figure 1 in a perspective view from the front, with parts removed for clarity;
- Figure 3 illustrates the compartment of Figures 1 and 2 in a lateral perspective view in a first operational configuration;
- Figure 4 is a perspective view from behind of the glove compartment of Figure 1 in a second operational configuration; and
- Figure 5 illustrates some details of the glove compartment of the Figures from 1 to 4 on an enlarged scale and in a perspective view.

With reference to the Figures from 1 to 4, a glove compartment for a motor vehicle is indicated as a whole with the number 1.

The compartment 1 is preferably integrated in a dashboard (not illustrated) of a motor vehicle and essentially comprises a main body 2 defining a housing space 3 for objects and a door 4 suitable to engage an opening 5 of access of the space 3 to prevent the objects from falling out or to remain open and thus distanced from the opening 5 to allow the objects to be inserted into and/or removed from the space 3.

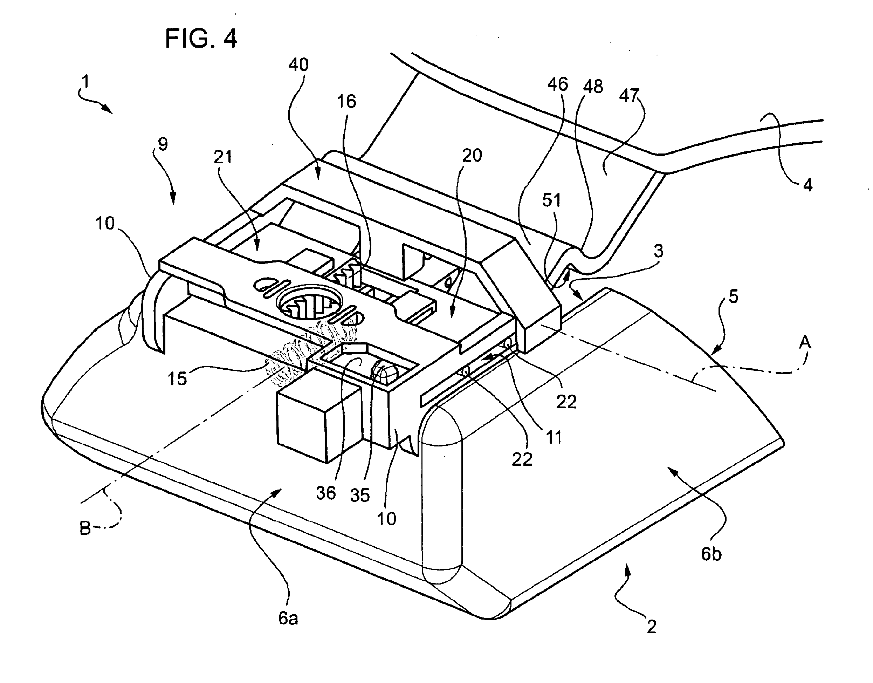

In particular, the space 3 is delimited by a back wall 6a (Figure 4) opposite the opening 5, by a pair of lateral walls 6b facing each other and by a pair of lower and upper walls 7, 8 interposed transversely between the lateral walls 6b. In particular, the lateral walls 6b extend from respective opposite lateral edges of the back wall 6a.

The opening 5 is, moreover, obtained in a frontal end portion of the space 3 and the door 4 is rotatable about an axis A arranged horizontally in use.

Advantageously, the door 4 is moveable along a translation stroke that is parallel to an axis B transversal to the axis A to move away from the opening 5 or approach said opening 5.

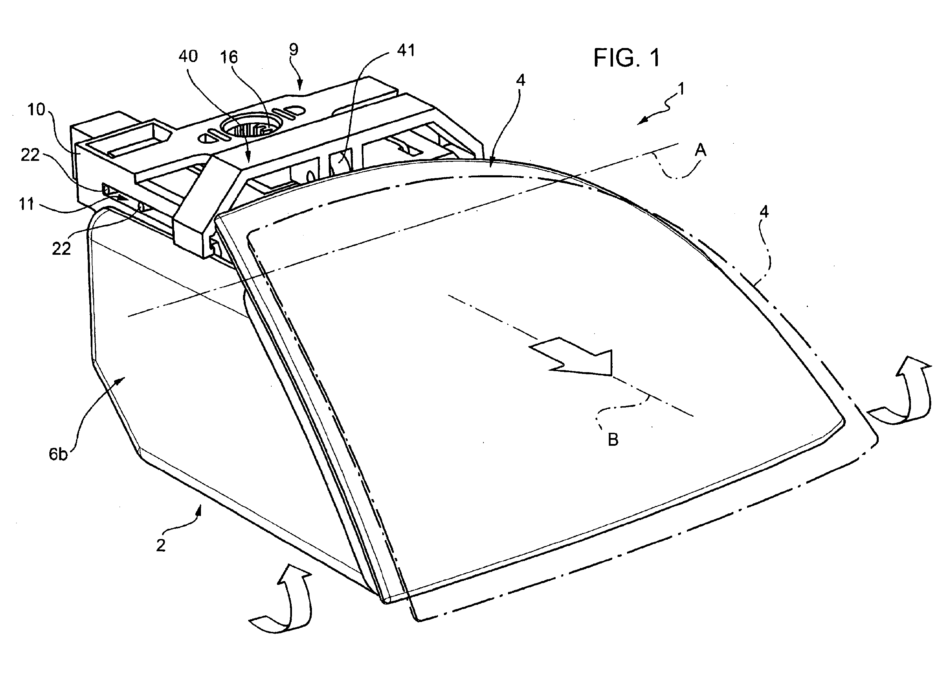

In more detail, the door 4 first performs the traverse movement along the axis B between a first position (represented as a continuous line in Figure 1) in which it engages the opening 5 and a second position (broken line in Figure 1) in which it faces the opening 5 at a distance, and subsequently rotates about the axis A to move into a third raised position (illustrated in Figure 4) in which it leaves the opening 5 free.

In particular, the axes A and B are orthogonal to each other and define a plane arranged horizontally in use.

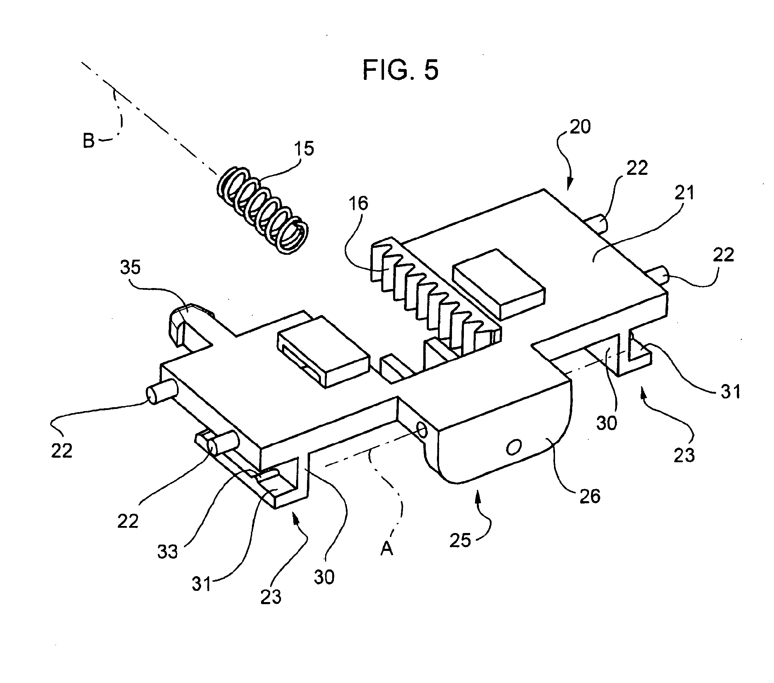

The compartment 1 comprises guiding means defined by a bridge 9 of the body 2, and a slide 20 (Figure 5) hinged to the door 4 about the axis A and slideable along the axis B in relation to the guiding means to enable the shifting of the door 4 between the first and second positions.

In greater detail, the bridge 9 comprises a pair of sides 10 which extend in a direction parallel to the axis B and are arranged on opposite sides of said axis B, and a crosspiece interposed between the sides 10 and arranged above the wall 8.

The wall 8 is also interposed between the sides 10.

The guiding means are defined by the sides 10 and consist of a pair of grooves 11 and a pair of surfaces 12.

In more detail, each side 10 defines its relative groove 11, which passes in a direction parallel to the axis A and extends along a respective direction parallel to the axis B.

Each side 10 is delimited, on the part towards the space 3, by its relative surface 12, which extends in a direction parallel to the axis B and is arranged below the groove 11.

Each groove 11 has a first extremity that is open and adjacent to the opening 5, and a second extremity, opposite the first extremity, that is closed and arranged on the part towards the back wall 6a.

The slide 20 essentially comprises (Figure 5):
- a main plate 21 lying on a plane parallel to the axes A, B and provided, in correspondence with each of its lateral edges parallel to the axis B, with a pair of pins 22 having their respective axes parallel to the axis A and engaging a respective groove 11;
- a pair of brackets 23 extending in a direction parallel to the axis B and projecting in a cantilevered fashion from a lower surface of the main plate 21 facing towards the space 3; and
- an appendage 25 projecting in a cantilevered fashion from an edge of a frontal extremity of the main plate 21 in the direction of the door 4, hinged to said door 4 about the axis A and having a flat end face 26 lying on a plane orthogonal to the plane defined by the axes A, B.

In more detail, each bracket 23 has an L-shaped cross section, and comprises a wall 30 projecting in a cantilevered fashion from a lower face of the main plate 21 towards the space 3 and a wall 31 cooperating slidingly with the respective surface 12 of the side 10.

In particular, the walls 31 are parallel to the main plate 21 and each extend from a respective wall 30 towards the relative side 10.

The wall 31 of each bracket 23 is provided with a curved projecting part 33 projecting towards the main plate 21.

In particular, the walls 30, 31 are arranged vertically and horizontally in use.

The axis A is also interposed between the pins 22 and the face 26.

The slide 20 has, on the part opposite the appendage 25, a projecting part 35 suitable to engage a housing 36 (Figure 4) of the body 2 and arranged laterally in relation to the axis B.

The projecting part 35 defines with the housing 36 a constraining device known as a "push" device. Said push device determines the disengagement of the projecting part 35 from the housing 36 when the projecting part 35 receives a direct action parallel to the axis B and oriented from the opening 5 towards the back wall 6a.

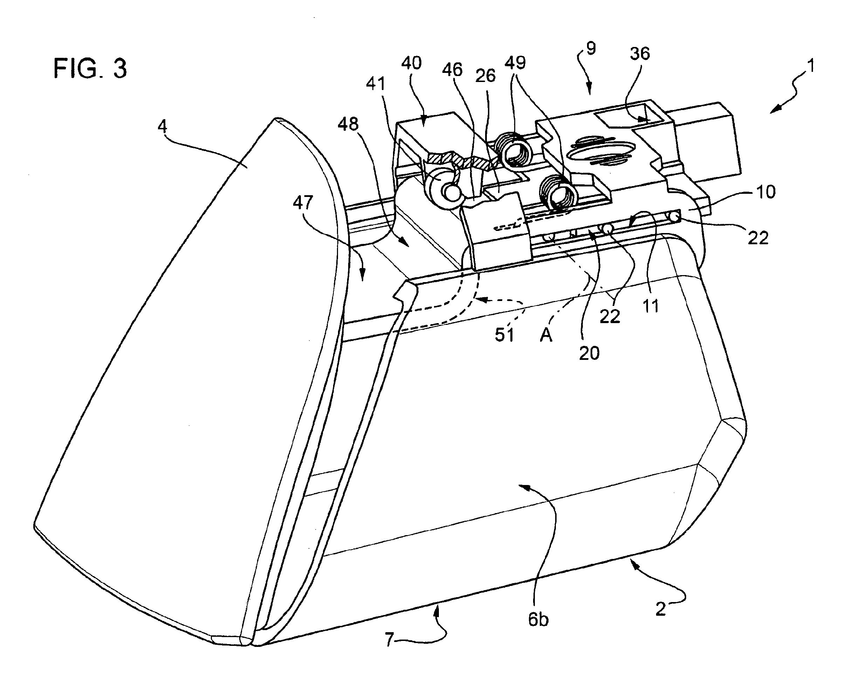

More precisely (Figure 3), when the projecting part 35 is housed within the housing 36, the pins 22 arranged on the part towards the back wall 6a come up against the respective second extremities of the relative grooves 11 and the door 4 is in its first position.

The compartment 1 also comprises a helical spring 15 (Figures 4 and 5) interposed between the body 2 and a face of the main plate 21 opposite the appendage 25.

The spring 15 loads the slide 20 in order to distance the projecting part 35 from the housing 36 and, consequently, loads the door 4 towards the second position. The spring 15 is coaxial to the axis B.

Finally, the slide 20 comprises a pair of racks 16 (only one of which is visible in Figure 5) which extend parallel to the axis B and face each other. The racks 16 are engaged by a toothed wheel (not illustrated) operationally connected to a disk (also not shown) revolving in a viscous fluid so as to dampen the movement of the door 4 between the first and second operating positions. In particular, the disc is connected to the toothed wheel by a shaft passing through an opening obtained in the crosspiece of the bridge 9.

The door 4 is integral (Figure 3) with a plate 46 hinged about the axis A to the appendage 25 of the slide 20 and elastically connected to the body 2 by a pair of springs 49.

More precisely, the door 4 and the plate 46 are connected by a wall 47 parallel to the plate 46 and by a wall 48 transversal to the plate 46.

The wall 47 bears the door 4 while the surface 48 is joined, in correspondence with its opposite end edges, to the plate 46 and to the wall 47.

The wall 48, on the part opposite the door 4, has a surface 51 suitable to come up against the face 26 of the appendage 25 when the door 4 is in the second position.

The walls 47, 48 are produced as integral parts of the door 4 and the plate 46.

The springs 49 are arranged on opposite sides of the axis B and load the door 4 towards the third operating position.

The body 2 also comprises a bridge 40 parallel to the axis A, above the slide 20 and fixed, in correspondence with its lateral extremities, to the sides 10.

The bridge 40 is parallel to the bridge 9 and is interposed between the door 4 and said bridge 9.

The compartment 1 comprises a wheel that is revolvable about an axis parallel to the axis A and hinged to a housing defined by an element that projects in a cantilevered fashion from the bridge 40 towards the space 3.

More precisely, the hinge axis of the wheel 41 is interposed vertically between the bridge 40 and the axis A.

The wheel 41 cooperates with the plate 46 when the door 4 slides between the first and second operating positions. More precisely, the wheel 41 keeps the plate 46 substantially horizontal, preventing the extension of the springs 49.

The operation of the compartment 1 is described starting from a condition illustrated in Figures 1 and 3, in which the door 4 is in the first position.

In this condition, the projecting part 35 engages the housing 36 and the wheel 41 cooperates with the plate 46.

The pins 22 closest to the back wall 6a also rest against the respective second extremities of the relative grooves 11.

When pressure is applied directly to the compartment 1 towards the back wall 6a, the projecting part 35 is disengaged from the housing 36.

The spring 15 can thus be extended, causing the translation of the slide 20 in a direction parallel to the axis B and on the side opposite the back wall 6a.

The translation of the slide 20 carries the door 4 to the second position.

In particular, as the slide 20 advances, the pairs of pins 22 slide in their respective grooves 11 towards the corresponding first extremities and the walls 31 slide on their respective surfaces 12.

The translation of the slide 20 stops when the projecting parts 33 move up against the respective stopping devices that are not illustrated borne by the respective surfaces 12.

During the translation of the slide 20, the wheel 41 also cooperates with the plate 46 keeping it essentially horizontal and thereby preventing the rotation of the door 4 about the axis A.

Once the slide 20 has advanced by a section so as to bring the plate 46 to a position in which it no longer cooperates with the wheel 41, the springs 49 extend and cause the door 4 to rotate about the axis A and in a counterclockwise direction with reference to the condition illustrated in Figure 4.

At this point, the door 4 is in the third position and enables access to the space 3.

The door 4 is manually brought from the third to the second position by turning it clockwise (with reference to Figure 4) about the axis A.

Said rotation stops when the surface 51 of the wall 48 moves up against the face 26 of the appendage 25.

Said rotation also determines the shortening of the springs 49.

Further manual pushing on the door 4 in a direction parallel to the axis B and towards the back wall 6a determines the translation of the slide 20 towards said back wall 6a.

Said translation stops when the pins 22 closest to the back wall 6a move up against the respective second extremities of the relative grooves 11, determining the engagement of the projecting part 35 in the housing 36.

The advantages that can be achieved with the compartment 1 according to the present invention are apparent from an examination of the characteristics thereof.

In particular, thanks to the fact that the axis A is arranged at a predetermined distance from the opening 5 when the door 4 is in the third position, the space 3 is particularly easy to access.

The Applicant also observed that the door 4 is particularly stable when it is arranged in the third position.

Finally, the compartment 1 has a particularly pleasant aesthetic appearance.

It is clear that changes and variations can be made to the compartment 1 as described and illustrated herein without departing from the scope of the invention as defined by the claims.

## Claims

1. Glove compartment (1) for a motor vehicle, comprising:
- a body (2) defining a storage space (3) for objects having, in turn, an access opening (5);
- a door (4) operationally connected to said body (2) and rotatable about a first axis (A); said door (4) being moveable along a translation stroke parallel to a second axis (B) transversal to said first axis (A) to move away from said opening (5);
- guiding means (11, 12) borne by said body (2);
- sliding means (20) slidable in relation to said guiding means (11, 12) along said second axis (B) to move said door (4) along said translation stroke between a first position, in which said door (4) engages said opening (5), and a second position, in which said door (4) is distanced from said opening (5);
**characterized in that** said sliding means (20) are hinged to said door (4) about said first axis (A).

2. Compartment according to claim 1, **characterized by** the fact that said translation stroke at least partly precedes a rotational movement of said door (4) about said first axis (A).

3. Compartment according to claim 2, **characterized in that** said rotational movement occurs between the said second position and a third position, in which said door (4) enables access to said space (3) through said opening (5).

4. Compartment according to anyone of the previous claims, **characterized in that** said guiding means (11, 12) comprise at least a groove (11) extending parallel to said second axis (B) and engaged slidingly by a pin (22) borne by said sliding means (20) when said door (4) translates between the first and second positions; said guiding means (11, 12) also comprising at least a backing surface (12) on which a bracket (23) slides borne by said sliding means (20), when said door (4) translates between the first and second position.

5. Compartment according to anyone of the previous claims, **characterized by** comprising means of constraint (35, 36) selectively releasable and suited to constrain said sliding means (20) to said body (2) in order to maintain said door (4) in said first position, and first elastic means (15) interposed between said body (2) and said sliding means (20) and loading said door (4) towards said second position.

6. Compartment according to claim 3, **characterized by** comprising delaying means (41) interposed between said door (4) and said body (2) to prevent the rotation of said door (4) during said translation stroke of said door (4), and second elastic means (49) acting between said body (2) and said door (4) and loading said door (4) towards the third position.

7. Compartment according to claim 6, **characterized by** comprising a plate (46) hinged to said sliding means (20) about said first axis (A) and integral with said door (4); and by the fact that said delaying means (41) comprise a wheel (41) rotatable around a third axis fixed in relation to said body (2), and cooperating with said plate (46) during the translation of said door (4) between said first and second positions.

8. Compartment according to claim 7, **characterized by** comprising at least a connecting element (47, 48) interposed between said plate (46) and said door (4); said connecting element (47, 48) comprising, on the side towards said space (3), a first surface (51); said sliding means (20) comprising, on the side towards said door (4), a second surface (26) suited to move up against said first surface (51) when said door (4) is arranged in said second position.

## Patentansprüche

1. Ein Handschuhfach (1) für ein Motorfahrzeug, wobei folgendes vorgesehen ist:
- ein Körper (2), der einen Speicherraum (3) für Objekte definiert, der seinerseits eine Zugriffsöffnung (5) besitzt;
- eine Tür (4) betriebsmäßig verbunden mit dem Körper (2) und drehbar um eine erste Achse (A); wobei die Tür (4) entlang eines Translationshubes parallel zu einer zweiten Achse (B) transversal zu der ersten Achse (A) zur Weg-Bewegung der Öffnung (5) bewegbar ist;
- Führungsmittel (11, 12) getragen von dem Körper (2);
- Gleitmittel (20), die in Bezug zu den Führungsmitteln (11, 12) entlang der zweiten Achse (B) gleitbar sind, um die Tür (4) entlang des erwähnten Translationshubs zwischen einer ersten Position und einer zweiten Position zu bewegen, wobei in der ersten Position die Tür (4) mit der Öffnung (5) in Eingriff steht, und wobei in der zweiten Position die Tür (4) von der erwähnten Öffnung (5) beabstandet ist;
**dadurch gekennzeichnet, dass** die erwähnten Gleitmittel (20) an der erwähnten Tür (4) an der erwähnten ersten Achse (A) angelenkt sind.

2. Handschuhfach nach Anspruch 1 **dadurch gekennzeichnet, dass** dem Translationshub mindestens teilweise eine Drehbewegung der Tür (4) um die erwähnte erste Achse (A) vorausgeht.

3. Handschuhfach nach Anspruch 2, **dadurch gekennzeichnet, dass** die Drehbewegung zwischen der erwähnten zweiten Position und einer dritten Position erfolgt, in der die Tür (4) Zugriff zu dem Raum (3) durch die erwähnte Öffnung (5) gestattet.

4. Fach nach einem der vorhergehenden Ansprüche **dadurch gekennzeichnet, dass** die erwähnten Führungsmittel (11, 12) mindestens eine Nut (11) aufweisen, die sich parallel zu der erwähnten zweiten Achse (B) erstreckt und die in Gleiteingriff mit einem Stift (22) steht, der durch die Gleitmittel (20) getragen ist, und zwar dann, wenn die erwähnte Tür (4) sich zwischen den ersten und zweiten Positionen bewegt; wobei die erwähnten Führungsmittel (11, 12) auch mindestens eine Stützfläche (12) aufweisen, auf der ein Bügel (23) gleitet, und zwar getragen durch die Gleitmittel (20), wenn die Tür (4) sich zwischen der ersten und zweiten Position bewegt.

5. Fach nach einem der vorhergehenden Ansprüche **dadurch gekennzeichnet, dass** Einschränkungsmittel (35, 36) vorgesehen sind, die selektiv freigebbar und die geeignet sind, um die Gleitmittel (20) am Körper (2) zu halten, um die Tür (4) in der ersten Position zu halten, und wobei ferner ersten elastische Mittel (15) zwischen dem erwähnten Körper (2) und den Gleitmitteln (20) angeordnet sind, und die Tür zu der erwähnten zweiten Position hin vorspannen.

6. Fach nach Anspruch 3 **gekennzeichnet durch** Verzögerungsmittel (41) angeordnet zwischen der Tür (4) und dem Körper (2), um die Drehung der Tür (4) während des Translationshubes der Tür (4) zu verhindern, wobei ferner zweite elastische Mittel (49) zwischen dem Körper (2) und der Tür (4) wirken und die Tür (4) zu der dritten Position hin vorspannen.

7. Fach nach Anspruch 6 **dadurch gekennzeichnet, dass** eine Platte (46) an den Gleitmitteln (20) um die erste Achse (A) herum angelenkt sind, und zwar integral mit der Tür (4) und ferner **dadurch gekennzeichnet, dass** die erwähnten Verzögerungsmittel (41) ein Rad (41) aufweisen, und zwar drehbar um eine dritte Achse die bezüglich des erwähnten Körpers (2) festgelegt ist und ferner kooperierend mit der Platte (46) während der Translation der Tür (4) zwischen den ersten und zweiten Positionen.

8. Fach nach Anspruch 7, **gekennzeichnet durch** mindestens ein Verbindungselement (47, 48) angeordnet zwischen der Platte (46) und der Tür (4); wobei das Verbindungselement (47, 48) auf der Seite zu dem erwähnten Raum (3) hin eine erste Oberfläche (5) aufweist; und wobei ferner die Gleitmittel (20) auf der Seite zur Tür (4) hin eine zweite Oberfläche (26) aufweisen, die geeignet ist, eine Bewegung aufwärts gegen die erste Oberfläche (51) hin auszuführen, wenn die Tür (4) in der erwähnten zweiten Position angeordnet ist.

## Revendications

1. Boîte à gants (1) pour un véhicule à moteur, comprenant :
un corps (2) définissant un espace de rangement (3) pour des objets, ayant à son tour une ouverture d'accès (5) ;
une porte (4) raccordée de manière opérationnelle audit corps (2) et pouvant tourner autour d'un premier axe (A) ; ladite porte (4) étant mobile le long d'une course de translation parallèle à un deuxième axe (B) transversal par rapport audit premier axe (A) pour s'éloigner de ladite ouverture (5) ;
des moyens de guidage (11, 12) portés par ledit corps (2) ;
des moyens de coulissement (20) pouvant coulisser par rapport auxdits moyens de guidage (11, 12) le long dudit deuxième axe (B) pour déplacer ladite porte (4) le long de ladite course de translation entre une première position dans laquelle ladite porte (4) met en prise ladite ouverture (5) et une deuxième position dans laquelle ladite porte (4) est à distance de ladite ouverture (5) ;
**caractérisée en ce que** lesdits moyens de coulissement (20) sont raccordés par charnière à ladite porte (4) autour dudit premier axe (A).

2. Boîte à gants selon la revendication 1, **caractérisée en ce que** ladite course de translation précède au moins partiellement un mouvement de rotation de ladite porte (4) autour dudit premier axe (A).

3. Boîte à gants selon la revendication 2, **caractérisée en ce que** ledit mouvement de rotation se produit entre ladite deuxième position et une troisième position, dans laquelle ladite porte (4) permet l'accès audit espace (3) par ladite ouverture (5).

4. Boîte à gants selon l'une quelconque des revendications précédentes, **caractérisée en ce que** lesdits moyens de guidage (11, 12) comprennent au moins une rainure (11) s'étendant parallèlement audit deuxième axe (B) et mise en prise de manière coulissante par une broche (22) portée par lesdits moyens de coulissement (20) lorsque ladite porte (4) effectue un mouvement de translation entre les première et deuxième positions ; lesdits moyens de guidage (11, 12) comprenant également au moins une surface de support (12) sur laquelle coulisse un support (23) porté par lesdits moyens de coulissement (20), lorsque ladite porte (4) effectue un mouvement de translation entre les première et deuxième positions.

5. Boîte à gants selon l'une quelconque des revendications précédentes, **caractérisée en ce qu'**elle comprend des moyens de contrainte (35, 36) sélectivement amovibles et appropriés pour retenir lesdits moyens de coulissement (20) sur ledit corps (2) afin de maintenir ladite porte (4) dans ladite première position, et des premiers moyens élastiques (15) intercalés entre ledit corps (2) et lesdits moyens de coulissement (20) et chargeant ladite porte (4) vers ladite deuxième position.

6. Boîte à gants selon la revendication 3, **caractérisée en ce qu'**elle comprend des moyens de retardement (41) intercalés entre ladite porte (4) et ledit corps (2) pour empêcher la rotation de ladite porte (4) pendant ladite course de translation de ladite porte (4) et des seconds moyens élastiques (49) agissant entre ledit corps (2) et ladite porte (4) et chargeant ladite porte (4) vers la troisième position.

7. Boîte à gants selon la revendication 6, **caractérisée en ce qu'**elle comprend une plaque (46) raccordée par charnière auxdits moyens de coulissement (20) autour dudit premier axe (A) et solidaire de ladite porte (4) ; et **en ce que** lesdits moyens de retardement (41) comprennent une roue (41) pouvant tourner autour d'un troisième axe fixe par rapport audit corps (2) et coopérant avec ladite plaque (46) pendant la translation de ladite porte (4) entre lesdites première et deuxième positions.

8. Boîte à gants selon la revendication 7, **caractérisée en ce qu'**elle comprend au moins un élément de raccordement (47, 48) intercalé entre ladite plaque (46) et ladite porte (4) ; ledit élément de raccordement (47, 48) comprenant, du côté situé vers ledit espace (3), une première surface (51) ; lesdits moyens de coulissement (20) comprenant, du côté situé vers ladite porte (4), une seconde surface (26) appropriée pour monter contre ladite première surface (51) lorsque ladite porte (4) est agencée dans ladite deuxième position.
